# EUROPEAN PATENT SPECIFICATION

(11) **EP 3 399 176 B1**
(45) Date of publication and mention of the grant of the patent: **27.04.2022**
(21) Application number: 16881686.6
(22) Date of filing: 22.12.2016
(51) Int. Cl.: F02F 3/00, F16J 1/09

(54) **PISTON OF INTERNAL COMBUSTION ENGINE**
KOLBEN FÜR VERBRENNUNGSMOTOR
PISTON POUR MOTEUR À COMBUSTION INTERNE

(30) Priority: 28.12.2015 JP 2015256001
(43) Date of publication of application: 07.11.2018
(73) Proprietor: Kawasaki Jukogyo Kabushiki Kaisha, Kobe-shi, Hyogo 650-8670 (JP)
(72) Inventor: MIYAMOTO, Sekai, Kobe-shi, Hyogo 650-8670 (JP); YOSHIHARA, Shintaro, Kobe-shi, Hyogo 650-8670 (JP); HORIE, Takashi, Kobe-shi, Hyogo 650-8670 (JP); KASHIWAGI, Toshinobu, Kobe-shi, Hyogo 650-8670 (JP)
(74) Representative: Dehns
(86) International application number: PCT/JP2016/088314
(87) International publication number: WO 2017/115711

(56) References cited:
- JP-A- S61 190 153
- JP-A- 2010 530 051
- JP-U- H0 383 346
- JP-U- H0 583 346
- US-A- 2 662 514
- US-A1- 2005 051 128
- US-A1- 2009 050 101

## Description

### Technical Field

The present invention relates to a piston of an internal combustion engine.

### Background Art

Conventionally, various-shaped pistons of internal combustion engines have been proposed. For example, Patent Literature 1 discloses a piston of an internal combustion engine, in which a groove extending in the circumferential direction and having a constant depth is formed in the top land of the piston. The groove is intended for storing an uncombusted fuel therein.

US 2009/0050101 A1 discloses a piston for an internal combustion engine, the piston having a plurality of waves formed circumferentially around the top land.

### Citation List

### Patent Literature

PTL 1: Japanese Laid-Open Utility Model Application Publication No. H05-83346

### Summary of Invention

### Technical Problem

However, the piston disclosed by Patent Literature 1 has a problem in that since the uncombusted fuel is stored in the groove, the concentration of the uncombusted fuel in exhaust gas is relatively high.

In view of the above, an object of the present invention is to provide a piston of an internal combustion engine, the piston making it possible to reduce the concentration of an uncombusted fuel in exhaust gas.

### Solution to Problem

The present invention provides a piston of an internal combustion engine, the piston comprising a top land with a plurality of partial grooves formed therein, the plurality of partial grooves extending in a circumferential direction and being spaced apart from each other in the circumferential direction, wherein each of the plurality of partial grooves is formed such that a depth of each partial groove is continuously reduced from a center of the partial groove toward both ends of the partial groove, characterised in that each partial groove has side surfaces parallel to each other and a bottom surface, or each partial groove has an upper side surface which is flat and a lower side surface which is sloped.

According to the above configuration, when a flame enters a gap between a cylinder wall surface and the top land, the flame flows in such a manner that the flame is drawn from both ends of the partial groove into the center of the partial groove. This makes it possible to assuredly combust an air-fuel mixture of air and a fuel in the partial groove. Consequently, the concentration of the uncombusted fuel in exhaust gas can be reduced.

Each of the plurality of partial grooves may be formed such that a bottom of each partial groove extends straight in a direction orthogonal to a radial direction of the top land. This configuration makes it possible to form the grooves at low cost.

The plurality of partial grooves may be three or more partial grooves, and a sum of occupied angles of the plurality of partial grooves may be not less than 60 degrees and not greater than 270 degrees. If the sum of the occupied angles of the partial grooves is not less than 60 degrees, the concentration of the uncombusted fuel in the exhaust gas can be reduced significantly, and if the sum of the occupied angles of the partial grooves is not greater than 270 degrees, the partial grooves can be readily machined.

### Advantageous Effects of Invention

The present invention makes it possible to reduce the concentration of the uncombusted fuel in the exhaust gas.

### Brief Description of Drawings

Fig. 1 is a plan view of a piston of an internal combustion engine according to one embodiment of the present invention.
Fig. 2 is a side view of the piston shown in Fig. 1.
Fig. 3 is an enlarged sectional view of an essential part of the piston shown in Fig. 1.
Fig. 4 is an enlarged sectional view of an essential part of a piston according to one variation.
Fig. 5 shows the results of experiments that were conducted to verify advantageous effects owing to a plurality of partial grooves.

### Description of Embodiments

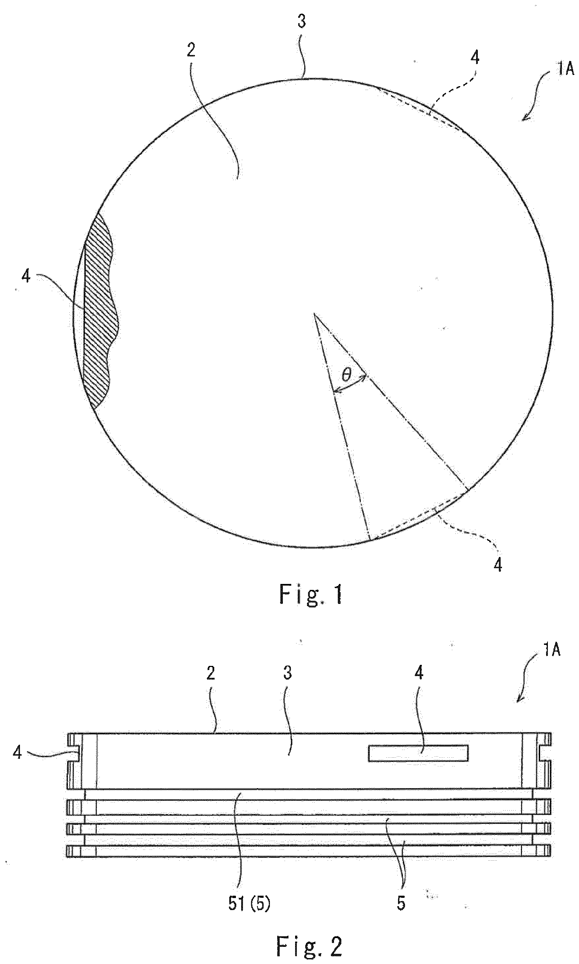

Fig. 1 and Fig. 2 show a piston 1A of an internal combustion engine according to one embodiment of the present invention. The fuel of the internal combustion engine, in which the piston 1A is used, may be a fuel oil such as gasoline or heavy oil, or may be a fuel gas such as natural gas or hydrogen.

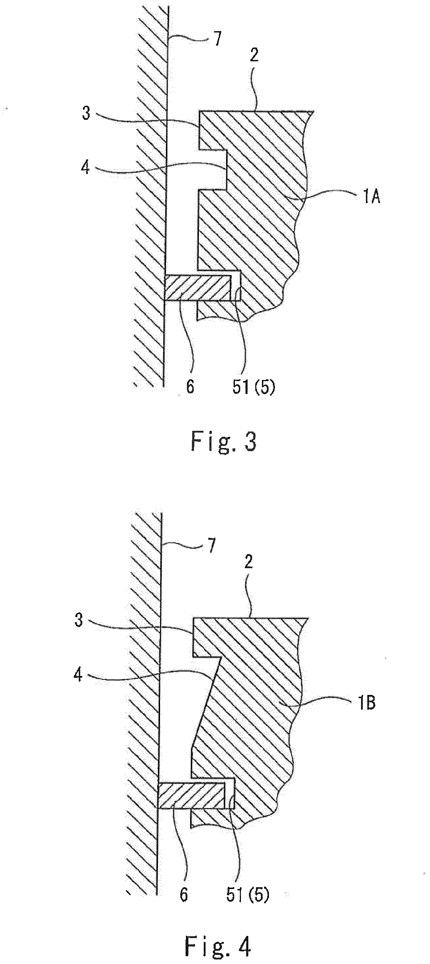

The piston 1A includes a top surface 2 and a peripheral surface. A plurality of ring grooves 5 are formed in the peripheral surface. As shown in Fig. 3, piston rings 6 are disposed in the respective ring grooves 5. Among the ring grooves 5, the ring groove 5 positioned uppermost (at the top surface 2 side) is a top ring groove 51. A part of the peripheral surface of the piston 1A, the part being positioned between the top ring groove 51 and the top surface 2, is a top land 3.

As shown in Fig. 1 and Fig. 2, a plurality of (in the illustrated example, three) partial grooves 4 are formed in the top land 3, such that they are spaced apart from each other in the circumferential direction. Desirably, the partial grooves 4 are disposed at regular intervals. However, the partial grooves 4 may be disposed at irregular intervals. Each of the partial grooves 4 extends in the circumferential direction. It should be noted that the plurality of partial grooves 4 may be two partial grooves 4, or may be four or more partial grooves 4.

More specifically, each partial groove 4 is formed such that the depth of the partial groove 4 is continuously reduced from the center of the partial groove 4 toward both ends of the partial groove 4. In the present embodiment, as shown in Fig. 3, each partial groove 4 has side surfaces parallel to each other and a bottom surface, i.e., each partial groove 4 has a rectangular sectional shape. Alternatively, for example, as in a piston 1B of a combustion engine according to one variation shown in Fig. 4, the sectional shape of each partial groove 4 may be a triangular shape, in which the upper side surface is flat and the lower side surface is sloped.

Further, in the present embodiment, each partial groove 4 is formed such that the bottom of the partial groove 4 extends straight in a direction orthogonal to the radial direction of the top land 3. However, as an alternative, the bottom of each partial groove 4 may be curved to be convex or concave. As another alternative, when seen in the axial direction of the piston 1A, the bottom of each partial groove 4 may form a broken line that bends at a plurality of points.

Still further, in the present embodiment, the depth of both ends of each partial groove 4 is zero. In other words, the depth of the partial groove 4 is continuously reduced from the center of the partial groove 4 toward both ends of the partial groove 4, such that the depth is reduced to zero. However, it is not essential that the depth of each partial groove 4 at both ends thereof be zero. Slight steps may be formed at both ends of each partial groove 4.

The occupied angle θ of each partial groove 4 (i.e., the angle between both ends of the partial groove 4 in the circumferential direction) is not particularly limited. The occupied angle θ is, for example, 15 to 45 degrees. Desirably, the plurality of partial grooves 4 are three or more partial grooves 4. In this case, the sum of the occupied angles θ of the partial grooves 4 (∑θ) is desirably not less than 60 degrees and not greater than 270 degrees. The reason for this is that if the sum of the occupied angles θ of the partial grooves 4 is not less than 60 degrees, the concentration of the uncombusted fuel in exhaust gas can be reduced significantly, and if the sum of the occupied angles θ of the partial grooves 4 is not greater than 270 degrees, the partial grooves 4 can be readily machined. For example, three partial grooves 4 each with θ = 20° may be formed, or six partial grooves 4 each with θ = 45° may be formed. More desirably, the sum of the occupied angles θ of the partial grooves 4 is not greater than 180 degrees.

In the piston 1A of the present embodiment with the above-described configuration, when a flame enters a gap between a cylinder wall surface 7 (see Fig. 3) and the top land 3, the flame flows in such a manner that the flame is drawn from both ends of the partial groove 4 into the center of the partial groove 4. This makes it possible to assuredly combust an air-fuel mixture of air and the fuel in the partial groove 4. Consequently, the concentration of the uncombusted fuel in the exhaust gas can be reduced. In other words, the fuel that is discharged together with the exhaust gas in the conventional art can be combusted and turned into work. This makes it possible to improve the combustion efficiency, and also, CO and NOₓ are reduced owing to the improved combustion efficiency.

In order to verify the above-described advantageous effects, in an internal combustion engine using natural gas as a fuel, the inventors of the present invention conducted comparative measurements between a case where the piston 1A of the present embodiment with three partial grooves 4 formed in the top land 3 was used and a case where a reference piston with no partial grooves 4 formed in the top land 3 (i.e., the top land of the reference piston has a cylindrical shape with no irregularities) was used. In each case, the THC (Total Hydro Carbon) concentration in the exhaust gas was measured. In the case of using the reference piston, the THC concentration was 580 ppm, whereas in the case of using the piston 1A of the present embodiment, the THC concentration was 450 ppm. It is clear from these experiments that the THC concentration was reduced by 130 ppm owing to the partial grooves 4.

In a case where no partial grooves 4 are formed in the top land 3, lubricating oil that rises beyond the piston rings 6 burns, and the lubricating oil residue is deposited on the entire top land 3. On the other hand, in a case where the partial grooves 4 are formed in the top land 3, lubricating oil that rises beyond the piston rings 6 is trapped in the partial grooves 4, and for this reason, the lubricating oil hardly burns above the partial grooves 4. Consequently, above the partial grooves 4, the lubricating oil residue is hardly deposited on the top land 3, and the gap between the cylinder wall surface 7 and the top land 3 can be kept greater than the quenching distance for a long term. Moreover, since the lubricating oil hardly burns, the lubricating oil consumption and the maintenance cost can be reduced, and the reliability during long-term operation can be improved.

Furthermore, since the lubricating oil hardly burns, the occurrence of an autoignition phenomenon derived from the lubricating oil (i.e., knocking) is reduced. When the autoignition phenomenon occurs, pressure waves are generated. When the pressure waves are generated, there is a risk that a knocking noise occurs when the pressure waves collide with the cylinder wall surface 7, and also, there is a risk of destruction of a temperature boundary layer near the wall surface. According to the present embodiment, the occurrence of the autoignition phenomenon that may cause such problems can be suppressed, and the quietness and reliability of the internal combustion engine can be improved.

In the present embodiment, the bottom of each partial groove 4 extends straight in a direction orthogonal to the radial direction of the top land 3. This makes it possible to form the partial grooves 4 at low cost.

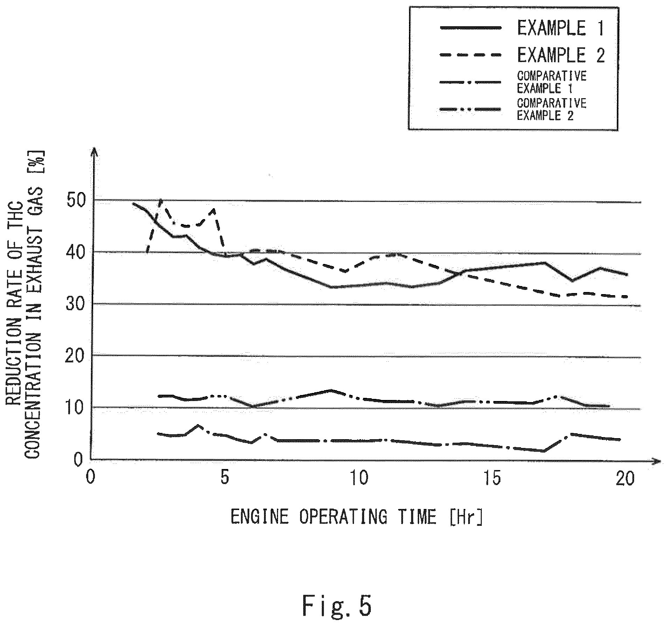

Fig. 5 shows the results of experiments that were conducted to verify the advantageous effects owing to the plurality of partial grooves 4. The solid line and the dashed line shown in Fig. 5 represent Examples 1 and 2, respectively, in each of which the plurality of partial grooves 4 are formed in the top land 3. The single-dotted dashed line and the double-dotted dashed line in Fig. 5 represent Comparative Examples 1 and 2, respectively, in each of which an annular groove continuous in the circumferential direction is formed in the top land 3. Fig. 5 shows to what extent the THC concentration in the exhaust gas was reduced in each of Examples 1 and 2 and Comparative Examples 1 and 2 along with the elapse of the engine operating time in comparison with the aforementioned reference piston with neither partial grooves nor an annular groove formed in the top land.

To be more specific, in Example 1, three partial grooves 4 each having the bottom extending straight in a direction orthogonal to the radial direction of the top land 3 are formed. The occupied angle θ of each partial groove 4 is 30 degrees, and the sum of the occupied angles θ of the partial grooves 4 is 90 degrees. The depth of the center (i.e., the maximum depth) of each partial groove 4 is about 3/100 of the diameter of the top land 3. The only difference in Example 2 from Example 1 is that the number of partial grooves 4 is changed from three to six. Therefore, in Example 2, the sum of the occupied angles θ of the partial grooves 4 is 180 degrees.

In Comparative Example 1, the depth of the annular groove is about 1/300 of the diameter of the top land 3. In Comparative Example 2, the depth of the annular groove is about 1/150 of the diameter of the top land 3 (i.e., twice the depth of the annular groove in Comparative Example 1).

It is understood from Fig. 5 that the concentration of the uncombusted fuel in the exhaust gas was not greatly reduced in Comparative Examples 1 and 2, in each of which the annular groove was formed in the top land 3, but the concentration of the uncombusted fuel in the exhaust gas was reduced significantly in Examples 1 and 2, in each of which the partial grooves 4 were formed in the top land 3 and the sum of the occupied angles θ of the partial grooves 4 was not less than 60 degrees.

### Reference Signs List

1A, 1B piston of an internal combustion engine
3 top land
4 partial groove

## Claims

1. A piston (1A, 1B) of an internal combustion engine, the piston comprising a top land (3) with a plurality of partial grooves (4) formed therein, the plurality of partial grooves extending in a circumferential direction and being spaced apart from each other in the circumferential direction, wherein
each of the plurality of partial grooves (4) is formed such that a depth of each partial groove is continuously reduced from a center of the partial groove toward both ends of the partial groove,
**characterised in that**
each partial groove has side surfaces parallel to each other and a bottom surface, or each partial groove has an upper side surface which is flat and a lower side surface which is sloped.

2. The piston of an internal combustion engine according to claim 1, wherein
each of the plurality of partial grooves (4) is formed such that a bottom of each partial groove extends straight in a direction orthogonal to a radial direction of the top land (3).

3. The piston of an internal combustion engine according to claim 1 or 2, wherein
the plurality of partial grooves (4) comprise three or more partial grooves, and
a sum of occupied angles (θ) of the plurality of partial grooves is not less than 60 degrees and not greater than 270 degrees.

## Patentansprüche

1. Kolben (1A, 1B) eines Verbrennungsmotors, wobei der Kolben einen oberen Kolbensteg (3) mit einer Vielzahl von darin gebildeten Teilrillen (4) umfasst, wobei sich die Vielzahl von Teilrillen in eine Umfangrichtung erstreckt und voneinander in der Umfangrichtung beabstandet sind, wobei
jede der Vielzahl von Teilrillen (4) so gebildet ist, dass sich eine Tiefe von jeder Teilrille von einer Mitte der Teilrille zu beiden Enden der Teilrille hin kontinuierlich verringert,
**dadurch gekennzeichnet, dass**
jede Teilrille zueinander parallele Gleitflächen und eine untere Fläche aufweist, oder jede Teilrille eine obere Seitenfläche, die plan ist, und eine unsere Seitenfläche, die geneigt ist, aufweist.

2. Kolben eines Verbrennungsmotors nach Anspruch 1, wobei jede der Vielzahl von Teilrillen (4) so gebildet ist, dass sich ein Boden von jeder Teilrille in eine Richtung orthogonal zu einer radialen Richtung des oberen Kolbenstegs (3) gerade erstreckt.

3. Kolben eines Verbrennungsmotors nach Anspruch 1 oder 2, wobei die Vielzahl von Teilrillen (4) drei oder mehr Teilrillen umfasst und eine Summe von besetzten Winkeln (θ) der Vielzahl von Teilrillen nicht weniger als 60 Grad und nicht mehr als 270 Grad beträgt.

## Revendications

1. Piston (1A, 1B) d'un moteur à combustion interne, le piston comprenant un méplat supérieur (3) avec une pluralité de rainures partielles (4) formées dedans, la pluralité de rainures partielles s'étendant dans une direction circonférentielle et étant espacées les unes des autres dans la direction circonférentielle, dans lequel
chacune de la pluralité de rainures partielles (4) est formée de sorte qu'une profondeur de chaque rainure partielle soit réduite en continu depuis un centre de la rainure partielle vers les deux extrémités de la rainure partielle,
**caractérisé en ce que**
chaque rainure partielle présente des surfaces latérales parallèles les unes aux autres et une surface inférieure, ou chaque rainure partielle présente une surface latérale supérieure qui est plate et une surface latérale inférieure qui est inclinée.

2. Piston d'un moteur à combustion interne selon la revendication 1, dans lequel
chacune de la pluralité de rainures partielles (4) est formée de sorte qu'un fond de chaque rainure partielle s'étende de manière droite dans une direction orthogonale à une direction radiale du méplat supérieur (3).

3. Piston d'un moteur à combustion interne selon la revendication 1 ou 2, dans lequel
la pluralité de rainures partielles (4) comprend trois rainures partielles ou plus, et
une somme d'angles occupés (θ) de la pluralité de rainures partielles n'est pas inférieure à 60 degrés et n'est pas supérieure à 270 degrés.
